# EUROPÄISCHE PATENTSCHRIFT

(11) **EP 3 797 048 B1**
(45) Veröffentlichungstag und Bekanntmachung des Hinweises auf die Patenterteilung: **22.06.2022**
(21) Anmeldenummer: 19745993.6
(22) Anmeldetag: 09.07.2019
(51) Int. Cl.: B60L 9/00, B61C 3/00, H01R 13/447, H01R 13/639

(54) **SCHIENENFAHRZEUG MIT ANORDNUNG ZUR SICHERUNG EINES ELEKTRISCHEN FREMDEINSPEISUNGS-ANSCHLUSSES**
RAIL VEHICLE WITH ASSEMBLY FOR SECURING AN ELECTRICAL EXTERNAL POWER SUPPLY CONNECTOR
VÉHICULE FERROVIAIRE AVEC ENSEMBLE SERVANT À BLOQUER UN RACCORD ÉLECTRIQUE D'ALIMENTATION EXTÉRIEURE

(30) Priorität: 30.07.2018 DE 102018212674
(43) Veröffentlichungstag der Anmeldung: 31.03.2021
(73) Patentinhaber: Siemens Mobility GmbH, 81739 München (DE)
(72) Erfinder: REISSING, Norbert, 93051 Regensburg (DE); SCHWERIN, Michael, 91322 Gräfenberg (DE); ZELTNER, Marc, 91244 Reichenschwand (DE)
(86) Internationale Anmeldenummer: PCT/EP2019/068393
(87) Internationale Veröffentlichungsnummer: WO 2020/025264

(56) Entgegenhaltungen:
- DE-U1- 8 232 630
- FR-A1- 3 005 794
- RU-U1- 179 904

## Beschreibung

Die Erfindung betrifft ein Schienenfahrzeug mit einer Anordnung zur Sicherung eines elektrischen Fremdeinspeisungs-Anschlusses am Schienenfahrzeug.

Ein Schienenfahrzeug weist für eine vorzunehmende Fremdeispeisung zumindest eine sogenannte Fremdeinspeisedose auf. Über die Fremdeinspeisedose kann eine externe Strom-Spannungs-Versorgung bei einer Spannung von 400 V erfolgen. Bei einem Schienenfahrzeug sind zur Erleichterung der Bedienbarkeit mehrere Fremdeinspeisedosen am Schienenfahrzeug vorgesehen.

Aus Sicherheitsgründen, die auf der konkreten Realisierung der Fremdeinspeisung im Schienenfahrzeug beruht, muss sichergestellt sein, dass ein Zugriff von Bedienpersonal nur auf jeweils eine Fremdeinspeisedose möglich ist.

Aus diesem Grund ist für jede Fremdeinspeisedose bzw. für jeden Anschluss einer Fremdeinspeisung eine mechanische Sicherung vorgesehen, wie sie nachfolgend beschrieben ist: Der der Anschluss wird von einem Gehäuse zumindest teilweise umfasst, wobei das Gehäuse einen Schlitz zur Aufnahme einer Sperre aufweist. Mit dem Gehäuse ist eine Klappe über eine Drehachse verbunden, so dass die Klappe zwischen einer ersten Position und einer zweiten Position drehbar ist. In der ersten Position deckt die Klappe den Anschluss zumindest teilweise ab und verhindert bzw. unterbindet damit einen Zugriff von Bedienpersonal auf den Anschluss. In der zweiten Position ist die Klappe derart positioniert, dass der Zugriff auf den Anschluss möglich ist.

Die Klappe weist einen Schließzylinder mit Schlüssel auf, wobei in einem ersten Zustand des Schließzylinders der Schlüssel aus dem Schließzylinder abziehbar ist und wobei in einem zweiten Zustand des Schließzylinders der Schlüssel im Schließzylinder gegen Entnahme gesichert ist.

Der Schließzylinder ist zur Drehung einer Sperre ausgebildet und mit dieser Sperre verbunden, wobei im ersten Zustand des Schließzylinders die Sperre vollständig in den Schlitz des Gehäuses eingreift, um die Klappe in der ersten Position zu verriegeln. Im zweiten Zustand des Schließzylinders steht die Sperre ohne Eingriff mit dem Schlitz des Gehäuses, um die Klappe in der ersten Position zu entriegeln und um ein verbringen der Klappe in die zweite Position zu ermöglichen.

Die Bewegung der Klappe wird also über den Schließzylinder mit Schlüssel ermöglicht bzw. blockiert. Wird über den Schlüssel der Schließzylinder aus dem ersten Zustand (Schließstellung) in den zweiten Zustand (Öffnungsstellung) gebracht, wird die Sperre aus dem Gehäuseschlitz entfernt und der Schlüssel im Schließzylinder arretiert. Die Klappe kann nun mit arretiertem Schlüssel von der ersten Position in die zweite Position verbracht werden.

Entsprechend verhält es sich umgekehrt: Wird die Klappe von der zweiten Position in die erste Position verbracht, kann nachfolgend der Schließzylinder über den Schlüssel aus dem zweiten Zustand (Öffnungsstellung) in den ersten Zustand (Schließstellung) gebracht werden. Damit wird die Sperre in den Gehäuseschlitz gedreht bzw. zum Eingriff gebracht. Die Klappe wird dadurch in dieser Position arretiert und der Schlüssel kann nun aus dem Schließzylinder entfernt werden.

Der Schlüssel ist für alle Schließzylinder der Fremdeinspeisedosen bzw. Anschlüsse des Schienenfahrzeugs identisch, ist aber nur einmal pro Schienenfahrzeug vorhanden. Dadurch wird sichergestellt, dass pro Schienenfahrzeug nur eine Fremdeinspeisedose von Bedienpersonal in Betrieb genommen werden kann.

Bei diesem bekannten Konzept ist es jedoch möglich, bei geöffneter Klappe den Schließzylinder in die Schließstellung zu bringen, so dass der Schlüssel abgezogen werden kann. Damit kann das ursprüngliche Prinzip der mechanischen Sicherung der Fremdeinspeisedose umgangen werden - eine missbräuchliche und ggf. lebensgefährliche Benutzung einer zweiten Fremdeinspeisedose durch Bedienpersonal wäre damit möglich.

Aus den Druckschriften RU 179904 U1 und FR 3005794 A1 sind Fremdeinspeisungen bekannt.

Aus der Druckschrift GB 2165403 A ist ein Schutz für einen Stecker eines elektrischen Steckverbinders bekannt.

Es ist daher die Aufgabe der vorliegenden Erfindung, eine verbesserte Anordnung zur Sicherung eines elektrischen Fremdeinspeisungs-Anschlusses für ein Schienenfahrzeug anzugeben, bei dem die oben genannten Gefahren eines etwaigen Missbrauchs verhindert werden.

Diese Aufgabe wird durch die Merkmale des Anspruchs 1 gelöst. Vorteilhafte Weiterbildungen sind in den weiteren Ansprüchen angegeben.

Beim Schienenfahrzeug mit einer Anordnung zur Sicherung eines elektrischen Fremdeinspeisungs-Anschlusses am Schienenfahrzeug ist der Anschluss von einem Gehäuse zumindest teilweise umfasst. Das Gehäuse weist einen Schlitz zur Aufnahme einer Sperre auf. Mit dem Gehäuse ist eine Klappe über eine Drehachse verbunden, so dass die Klappe zwischen einer ersten Position und einer zweiten Position drehbar ist. In der ersten Position deckt die Klappe den Anschluss zumindest teilweise ab und unterbindet damit einen Zugriff auf den Anschluss. Die Klappe ermöglicht in der zweiten Position den Zugriff auf den Anschluss. Die Klappe weist einen Schließzylinder mit Schlüssel auf, wobei in einem ersten Zustand des Schließzylinders der Schlüssel aus dem Schließzylinder abziehbar ist und wobei in einem zweiten Zustand des Schließzylinders der Schlüssel im Schließzylinder gegen Entnahme gesichert ist. Der Schließzylinder ist zur Drehung einer Sperre ausgebildet und mit dieser verbunden. Im ersten Zustand des Schließzylinders greift die Sperre vollständig in den Schlitz des Gehäuses ein, um die Klappe in der ersten Position zu verriegeln. Im zweiten Zustand des Schließzylinders steht die Sperre ohne Eingriff mit dem Schlitz des Gehäuses, um die Klappe in der ersten Position zu entriegeln und um ein Verbringen der Klappe in die zweite Position zu ermöglichen.

Erfindungsgemäß weist die Klappe einen Schlitz zur Aufnahme der Sperre auf, wobei in der ersten Position der Klappe der Schlitz der Klappe mit dem Schlitz des Gehäuses derart übereinstimmt, dass im ersten Zustand des Schließzylinders die Sperre vollständig in den Schlitz des Gehäuses und in den Schlitz der Klappe eingreift, während in der zweiten Position der Klappe der Schlitz der Klappe derart ausgebildet und zum Schlitz des Gehäuses angeordnet ist, dass ein Eingriff der Sperre in den Schlitz des Gehäuses unterbunden ist. Erfindungsgemäß weist das Schienenfahrzeug mindestens zwei dieser gesicherten Anschlüsse auf, wobei die zumindest zwei Schließzylinder für eine Betätigung durch einen identischen Schlüssel ausgebildet sind. Im operativen Betrieb des Schienenfahrzeugs ist für das Bedienpersonal am Schienenfahrzeug nur genau ein Schlüssel für die Betätigung der Schließzylinder vorgesehen.

Diese mechanische Ausführung verhindert wirkungsvoll ein Abziehen des Schlüssels aus dem Schließzylinder, solange die Klappe sich in der zweiten Position (Zugriff aus dem Anschluss ist möglich) befindet. Die Sperre kann in dieser Klappenposition nicht in den Schlitz des Gehäuses eingreifen, so dass über die blockierte Sperre der Schließzylinder nicht in den Zustand gelangt, in dem ein Abziehen des Schlüssels aus dem Schließzylinder möglich wäre.

Die mechanische Ausführung der Erfindung ist billig, mit geringstem Aufwand und sehr platzsparend realisierbar. Aufgrund der einfachen Realisierung werden Fehlfunktionen zuverlässig vermieden.

Durch eine Verwendung von Standardbauteilen, z.B. für den Schließzylinder, werden Kosten eingespart.

In einer vorteilhaften Weiterbildung besteht sowohl das Gehäuse als auch die Klappe aus geformten Blechteilen.

Nachfolgend wird die vorliegende Erfindung beispielhaft anhand einer Zeichnung näher beschrieben. Dabei zeigt

FIG 1 die Anordnung zur Sicherung eines Fremdeinspeisungs-Anschlusses des erfindungsgemäßen Schienenfahrzeuges bei geöffneter Klappe,

FIG 2 die Anordnung bei geschlossener Klappe, und

FIG 3 die wesentlichen Komponenten der Anordnung bei geöffneter Klappe.

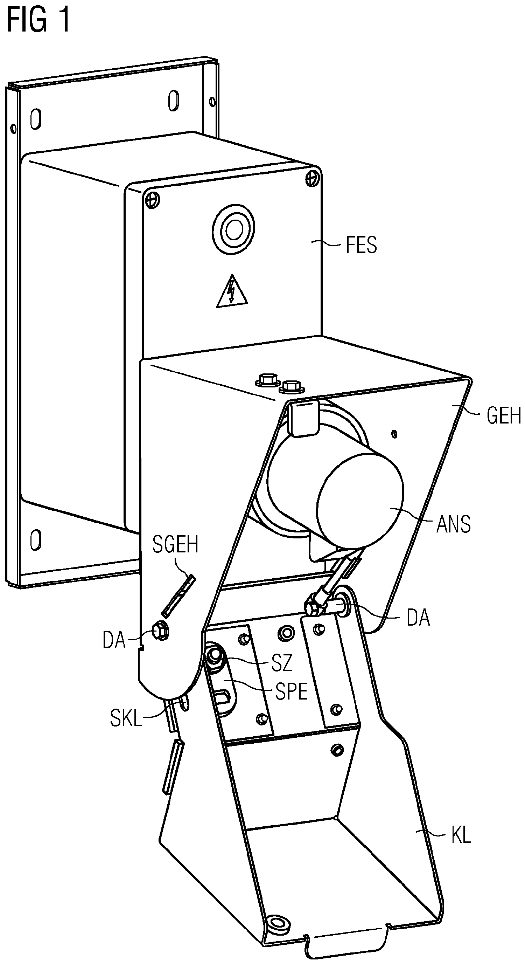

FIG 1 zeigt die Anordnung zur Sicherung eines Fremdeinspeisungs-Anschlusses des erfindungsgemäßen Schienenfahrzeuges bei geöffneter Klappe KL.

Ein Anschluss ANS, der am Schienenfahrzeug (nicht gezeigt) als Teil einer Fremdeinspeisung FES vorgesehen ist, ist von einem Gehäuse GEH zumindest teilweise umfasst.

Das Gehäuse GEH weist einen Schlitz SGEH zur Aufnahme einer später gezeigten Sperre auf.

Mit dem Gehäuse GEH ist eine Klappe KL über eine Drehachse DA verbunden, so dass die Klappe zwischen einer später gezeigten ersten Position (geschlossene Position) und der hier gezeigten zweiten Position (offene Position) drehbar ist.

In der hier gezeigten zweiten Position der Klappe KL ist ein Zugriff auf den Anschluss ANS der Fremdeinspeisung FES, beispielswiese durch Bedienpersonal, möglich.

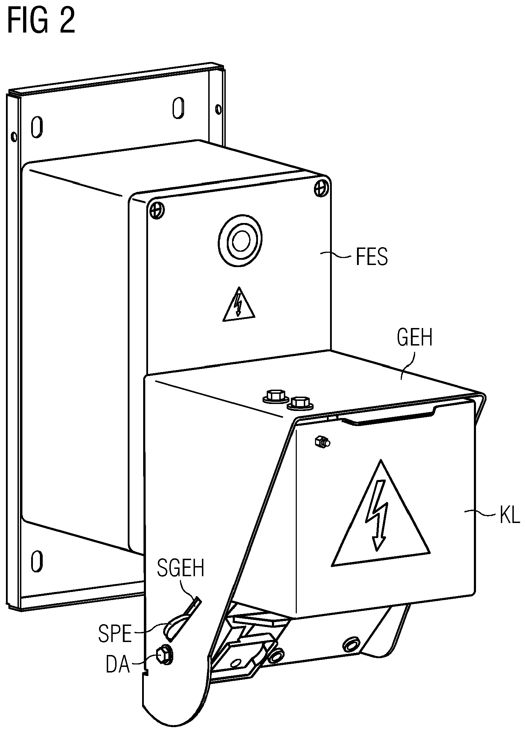

Die Klappe KL weist einen später näher beschriebenen Schließzylinder SZ auf, der durch einen Schlüssel (hier nicht gezeigt) in verschiedene Zustände gebracht werden kann. Vorgreifend und mit Verweis auf FIG 2 ist in einem ersten Zustand des Schließzylinders SZ der Schlüssel aus dem Schließzylinder SZ abziehbar.

In FIG 1 befindet sich der Schließzylinder SZ in einem zweiten Zustand, bei dem der Schlüssel im Schließzylinder SZ gegen Entnahme gesichert ist und somit nicht abgezogen werden kann.

Der Schließzylinder SZ ist mit einer Sperre SPE verbunden und zur Drehung der Sperre SPE ausgebildet.

Die Klappe KL weist einen Schlitz SKL zur Aufnahme der Sperre SPE auf.

In der hier gezeigten zweiten Position der Klappe KL (offene Position) ist der Schlitz SGEH des Gehäuses GEH zum Schlitz SKL der Klappe KL derart angeordnet, dass ein Eingriff der Sperre SPE in den Schlitz SGEH des Gehäuses GEH unterbunden ist.

Wie nachfolgend näher beschrieben wird, kann damit der Schlüssel aus dem Schließzylinder SZ in dieser Position der Klappe KL nicht abgezogen werden.

FIG 2 zeigt mit Bezug auf FIG 1 die Anordnung zur Sicherung eines Fremdeinspeisungs-Anschlusses des erfindungsgemäßen Schienenfahrzeuges mit geschlossener Klappe KL.

Hier ist die Klappe KL über die Drehachse DA in die erste Position (geschlossene Position) gebracht, bei der die Klappe KL den in FIG 1 gezeigten Anschluss ANS zumindest teilweise abdeckt und damit einen Zugriff auf den Anschluss ANS unterbindet.

In dieser Position kann der hier verdeckte Schließzylinder (FIG 1, SZ) sowohl einen ersten Zustand aufweisen, in dem der Schlüssel aus dem Schließzylinder abziehbar ist, als auch den zweiten Zustand aufweisen, in dem der Schlüssel im Schließzylinder (FIG 1, SZ) gegen Entnahme gesichert ist. Hier befindet sich der Schließzylinder (FIG 1, SZ) im ersten Zustand: die Sperre SPE greift vollständig sowohl in den Schlitz SGEH des Gehäuses GEH als auch in den Schlitz SKL der Klappe KL ein. Damit ist die Klappe KL in dieser ersten Position verriegelt.

Um dies zu erreichen, stimmt in der ersten Position der Klappe KL der Schlitz SKL der Klappe KL mit dem Schlitz SGEH des Gehäuses GEH in ihrer Ausgestaltung und in ihrer Position überein, so dass im ersten Zustand des Schließzylinders die Sperre SPE vollständig in beide Schlitze SKL, SGEH eingreift.

Der Vollständigkeit halber wird kurz auf den hier nicht gezeigten zweiten Zustand des Schließzylinders eingegangen, der durch Drehung des Schlüssels erreicht wird:
Dann würde die Sperre SPE gedreht werden und wäre ohne Eingriff in die beiden Schlitze SGEH und SKL, die Klappe KL wäre in der ersten Position entriegelt und könnte in die zweite Position (offene Position) gebracht werden.

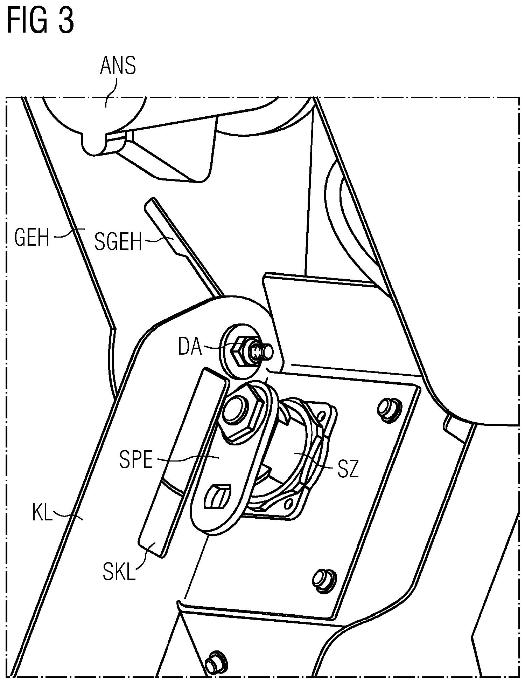

FIG 3 zeigt mit Bezug auf FIG 1 und auf FIG 2 die wesentlichen Komponenten der Anordnung bei geöffneter Klappe KL.

Die Klappe KL ist hier in der zweiten Position, so dass ein Zugriff auf den Anschluss möglich ist.

Die Klappe KL weist den Schließzylinder SZ auf, wobei in dieser Position der Klappe KL, bedingt durch die Lage und Anordnung der Schlitze SGEH und SKL, sich der Schließzylinder SZ im zweiten Zustand befindet - d.h. der zugehörige Schlüssel ist im Schließzylinder SZ gegen eine Entnahme gesichert.

In dieser zweiten Position der Klappe KL stimmt der Schlitz SKL der Klappe KL mit dem Schlitz SGEH des Gehäuses GEH nicht überein - beide überlappen sich hier bestenfalls nur teilweise, so dass ein Eingriff der Sperre SPE in den Schlitz SGEH des Gehäuses GEH unterbunden ist.

Durch diese Blockierung der Sperre SPE verbleibt der Schließzylinder SZ im zweiten Zustand, so dass der zugehörige Schlüssel gegen eine Entnahme gesichert ist.

## Patentansprüche

1. Schienenfahrzeug mit einer Anordnung zur Sicherung eines elektrischen Fremdeinspeisungs-Anschlusses am Schienenfahrzeug,
- bei der der Anschluss von einem Gehäuse zumindest teilweise umfasst ist und das Gehäuse einen Schlitz zur Aufnahme einer Sperre aufweist,
- bei der mit dem Gehäuse eine Klappe über eine Drehachse verbunden ist, so dass die Klappe zwischen einer ersten Position und einer zweiten Position drehbar ist, wobei in der ersten Position die Klappe den Anschluss zumindest teilweise abdeckt und damit einen Zugriff auf den Anschluss unterbindet, und wobei die Klappe in der zweiten Position den Zugriff auf den Anschluss ermöglicht,
- bei der die Klappe einen Schließzylinder mit Schlüssel aufweist, wobei in einem ersten Zustand des Schließzylinders der Schlüssel aus dem Schließzylinder abziehbar ist und wobei in einem zweiten Zustand des Schließzylinders der Schlüssel im Schließzylinder gegen Entnahme gesichert ist,
- bei der der Schließzylinder zur Drehung einer Sperre ausgebildet und mit dieser verbunden ist,
- wobei im ersten Zustand des Schließzylinders die Sperre vollständig in den Schlitz des Gehäuses eingreift, um die Klappe in der ersten Position zu verriegeln, und
- wobei im zweiten Zustand des Schließzylinders die Sperre ohne Eingriff mit dem Schlitz des Gehäuses steht, um die Klappe in der ersten Position zu entriegeln und um ein Verbringen der Klappe in die zweite Position zu ermöglichen,
wobei
- die Klappe einen Schlitz zur Aufnahme der Sperre aufweist, und wobei
- in der ersten Position der Klappe der Schlitz der Klappe mit dem Schlitz des Gehäuses derart übereinstimmt, dass im ersten Zustand des Schließzylinders die Sperre vollständig in den Schlitz des Gehäuses und in den Schlitz der Klappe eingreift, und wobei
- in der zweiten Position der Klappe der Schlitz der Klappe derart ausgebildet und zum Schlitz des Gehäuses angeordnet ist, dass ein Eingriff der Sperre in den Schlitz des Gehäuses unterbunden ist, so dass der Schließzylinder im zweiten Zustand verbleibt,
- wobei das Schienenfahrzeug mindestens zwei dieser gesicherten Anschlüsse aufweist und die zumindest zwei Schließzylinder für eine Betätigung durch einen identischen Schlüssel ausgebildet sind,
- wobei im operativen Betrieb des Schienenfahrzeugs für das Bedienpersonal am Schienenfahrzeug nur genau ein Schlüssel für die Betätigung der Schließzylinder vorgesehen ist.

2. Schienenfahrzeug nach Anspruch 1, **dadurch gekennzeichnet, dass** das Gehäuse und/oder die Klappe aus Stahlblech gefertigt sind.

3. Schienenfahrzeug nach Anspruch 1 oder 2, **dadurch gekennzeichnet, dass** das Schienenfahrzeug eine Lokomotive ist.

## Claims

1. Rail vehicle having an assembly for securing an electrical external power supply connector on the rail vehicle,
- in which the connector is at least partially enclosed by a housing, and the housing has a slot for receiving a catch,
- in which a flap is connected to the housing via a pivot pin such that the flap can rotate between a first position and a second position, wherein, in the first position, the flap at least partially covers the connector and thus prevents access to the connector, and wherein, in the second position, the flap allows access to the connector,
- in which the flap has a lock cylinder with key, wherein, in a first state of the lock cylinder, the key can be pulled out of the lock cylinder, and wherein, in a second state of the lock cylinder, the key is secured in the lock cylinder against removal,
- in which the lock cylinder is designed to rotate a catch and is connected thereto,
- wherein, in the first state of the lock cylinder, the catch completely engages in the slot in the housing in order to lock the flap in the first position, and
- wherein, in the second state of the lock cylinder, the catch is not in engagement with the slot of the housing in order to unlock the flap in the first position and in order to allow the flap to be brought into the second position,
wherein
- the flap has a slot for receiving the catch, and wherein
- in the first position of the flap, the slot in the flap corresponds with the slot in the housing in such a way that, in the first state of the lock cylinder, the catch completely engages in the slot in the housing and in the slot in the flap, and wherein
- in the second position of the flap, the slot in the flap is designed and is arranged with respect to the slot in the housing in such a way that engagement of the catch in the slot in the housing is prevented, with the result that the lock cylinder remains in the second state,
- wherein the rail vehicle has at least two of these secured connectors and the at least two lock cylinders are designed to be actuated by an identical key,
- wherein, in the operative mode of the rail vehicle, only exactly one key for actuating the lock cylinders is provided for the operating personnel on the rail vehicle.

2. Rail vehicle according to Claim 1, **characterized in that** the housing and/or the flap are/is fabricated from steel sheet.

3. Rail vehicle according to Claim 1 or 2, **characterized in that** the rail vehicle is a locomotive.

## Revendications

1. Véhicule ferroviaire avec un ensemble servant à bloquer un raccord électrique d'alimentation extérieure sur le véhicule ferroviaire,
- dans lequel le raccord est au moins partiellement entouré par un boîtier et le boîtier présente une fente pour recevoir un verrou,
- dans lequel un clapet est relié au boîtier par l'intermédiaire d'un axe de rotation de sorte que le clapet puisse être tourné entre une première position et une seconde position, dans lequel dans la première position le clapet recouvre au moins partiellement le raccord et empêche ainsi l'accès au raccord, et dans lequel le clapet dans la seconde position permet l'accès au raccord,
- dans lequel le clapet comprend un cylindre de serrure avec une clé, dans lequel la clé peut être retirée du cylindre de serrure dans un premier état du cylindre de serrure et la clé dans le cylindre de serrure est bloquée afin de ne pas pouvoir être retirée dans un second état du cylindre de serrure,
- dans lequel le cylindre de serrure est conçu pour faire tourner un verrou et est relié à celui-ci,
- dans lequel, dans le premier état du cylindre de serrure, le verrou vient complètement en prise avec la fente du boîtier afin de verrouiller le clapet dans la première position, et
- dans lequel, dans le second état du cylindre de serrure, le verrou ne vient pas en prise avec la fente du boîtier afin de déverrouiller le clapet dans la première position et de permettre le déplacement du clapet vers la seconde position,
- dans lequel le clapet comprend une fente pour recevoir le verrou, et
- dans lequel, dans la première position du clapet, la fente du clapet vient en prise avec la fente du boîtier de sorte que dans le premier état du cylindre de serrure, le verrou vient complètement en prise avec la fente du boîtier et dans la fente du clapet, et
- dans lequel, dans la seconde position du clapet, la fente du clapet est conçue et agencée par rapport à la fente du boîtier de sorte que le verrou ne puisse pas venir en prise avec la fente du boîtier, de sorte que le cylindre de serrure reste dans le second état,
- dans lequel le véhicule ferroviaire comprend au moins deux de ces raccords sécurisés et les au moins deux cylindres de serrure sont conçus pour être actionnés à l'aide d'une clé identique,
- dans lequel, lors du fonctionnement du véhicule ferroviaire, une seule clé est prévue pour l'actionnement du cylindre de serrure pour le personnel de service du véhicule ferroviaire.

2. Véhicule ferroviaire selon la revendication 1, **caractérisé en ce que** le boîtier et/ou le clapet sont fabriqués à partir de tôle d'acier.

3. Véhicule ferroviaire selon la revendication 1 ou 2, **caractérisé en ce que** le véhicule ferroviaire est une locomotive.
